# FASCICULE DE BREVET EUROPEEN

(11) **EP 2 179 117 B1**
(45) Date de publication et mention de la délivrance du brevet: **05.01.2011**
(21) Numéro de dépôt: 08787009.3
(22) Date de dépôt: 07.08.2008
(51) Int. Cl.: E05B 63/14, E05C 19/14, B64C 1/14, B64D 29/08

(54) **DISPOSITIF DE VERROUILLAGE**
SPERRVORRICHTUNG
LOCKING DEVICE

(30) Priorité: 20.08.2007 FR 0705934
(43) Date de publication de la demande: 28.04.2010
(73) Titulaire: Aircelle, 76700 Gonfreville L'Orcher (FR)
(72) Inventeur: SOULIER, Pascal-Marie Paul Marcel, F-76600 Le Havre (FR); DE SORBAY, Aurélie, F-76600 Le Havre (FR)
(74) Mandataire: Chevalier, Renaud Philippe
(86) Numéro de dépôt international: PCT/EP2008/060413
(87) Numéro de publication internationale: WO 2009/024477

(56) Documents cités:
- EP-A- 0 839 714
- EP-A- 1 167 186
- FR-A- 2 771 710
- GB-A- 594 198
- US-A- 4 531 769
- US-A- 4 549 708

## Description

Un dispositif de verrouillage est en particulier utilisé afin d'équiper une nacelle, elle-même destinée à équiper un aéronef.

Une nacelle est un élément de carénage permettant de protéger un réacteur d'un aéronef. Une nacelle comporte généralement deux éléments articulés sur le mat de l'aéronef de manière à permettre un accès au moteur logé à l'intérieur de la nacelle, notamment lors d'opérations de maintenance. Ce genre de dispositif de verrouillage pour nacelles est connu de par exemple EP-A1-839714, FR-A-2771710, EP-A1-1167186 ou de US-A-4549708.

De manière classique, une nacelle comporte au moins un premier et un second dispositifs de verrouillage, comportant respectivement un premier et un second systèmes de verrouillage, équipés d'une première et d'une seconde poignées de commande, destinées à être actionnées par un opérateur. Ce genre de dispositif de verrouillage pour nacelles est connu de par exemple EP-A1-839714, FR-A-27711710, EP-A1-1167186 ou de US-A-4549708.

Le premier système de verrouillage est destiné à assurer le verrouillage de la nacelle dans la zone de jonction disposée en partie basse; c'est-à-dire à 6 heures, tandis que le second système de verrouillage est destiné à assurer le verrouillage dans la zone de jonction disposée en partie haute, c'est-à-dire à 12 heures.

Les poignées sont toutes deux disposées en partie basse de la nacelle, pour des raisons d'accessibilité.

L'utilisation de tels dispositifs de verrouillage présente les inconvénients exposés ci-après.

Lors de l'ouverture de la nacelle, les deux éléments sont articulés autour d'axes situés en partie haute, les éléments étant soumis à l'action de vérins.

Le premier système de verrouillage situé en partie basse est capable de s'opposer à une ouverture accidentelle de la nacelle lorsque celui-ci est verrouillé. En effet, le premier système de verrouillage est situé à distance des axes d'articulation des deux éléments de la nacelle et l'effort exercé par les vérins n'est pas suffisant pour engendrer une détérioration du premier système de verrouillage ou de la nacelle.

Au contraire, si seul le second système de verrouillage situé en partie haute de la nacelle est verrouillé, celui-ci n'est pas capable de résister à l'effort exercé par les vérins, sauf à prévoir un dimensionnement particulier et contraignant de la structure de la nacelle. Dans ce cas, le second système de verrouillage, voire même les éléments articulés de la nacelle, peuvent être fortement endommagés.

En outre, l'opérateur est forcé d'actionner deux poignées afin de déverrouiller ou de verrouiller les dispositifs de verrouillage précité, ce qui est fastidieux et engendre facilement des d'erreurs de manipulation dont les conséquences sont notamment exposées ci-avant.

Le risque d'une telle erreur de manipulation est d'autant plus important que l'opérateur ne voit pas le second système de verrouillage, disposé en partie haute de la nacelle. La fermeture de celui-ci est ainsi réalisée « en aveugle ».

Enfin, d'autres inconvénients sont la complexité, le poids et l'encombrement des deux dispositifs de verrouillage.

L'invention vise à remédier en tout ou partie à ces inconvénients en proposant un dispositif de verrouillage qui soit notamment simple et sûr d'utilisation.

A cet effet, l'invention concerne un dispositif de verrouillage comportant un premier système de verrouillage équipé d'une poignée de commande, destinée à être actionnée par un opérateur, **caractérisé en ce qu**'il comporte un second système de verrouillage, relié au premier par des moyens de liaison agencés pour actionner le second système de verrouillage du fait de l'actionnement du premier, le premier système de verrouillage étant actionné alternativement entre un état de verrouillage et un état de déverrouillage par déplacement de la poignée sur la totalité d'une course déterminée, les moyens de liaison comportant des moyens de séquençage agencés pour actionner le second système de verrouillage, respectivement entre un état de verrouillage et un état de déverrouillage de celui-ci, lors du déplacement de la poignée sur une partie seulement de la course de celle-ci.

De cette manière, lors de l'ouverture du dispositif de verrouillage à l'aide de la poignée, le second système de verrouillage est déverrouillé ou « ouvert » avant le premier. Ainsi, lorsque le premier système de verrouillage est complètement déverrouillé, l'opérateur est certain que le second système de verrouillage l'est aussi.

De même, lors de la fermeture du dispositif de verrouillage, le second système de verrouillage est verrouillé ou « fermé » avant le premier. Ainsi, lorsque le premier système de verrouillage est complètement verrouillé, l'opérateur est certain que le second système de verrouillage l'est aussi.

Ainsi, dans un exemple d'application à une nacelle, le premier système de verrouillage est avantageusement celui disposé à 6 heures, le second étant celui disposé à 12 heures.

Le séquençage entre l'actionnement des deux systèmes de verrouillage permet en outre de compenser les tolérances d'ajustement et de réglage des moyens de liaison. En effet, s'il était envisagé de commander simultanément les deux systèmes de verrouillage à l'aide de la poignée, cela nécessiterait un réglage et un ajustage précis des moyens de liaison entre les deux systèmes de verrouillage, ce qui est particulièrement difficile avec des éléments distants et mobiles. Cela devient en outre très contraignant avec des éléments soumis à des différences de température élevées du fait des effets de dilatation des matériaux et des grandes dimensions des éléments. Or, si les deux systèmes de verrouillage ne sont pas commandés exactement de manière simultanée, le risque de détérioration précité subsiste lors d'une ouverture accidentelle de la nacelle.

Enfin, en l'absence de séquençage, et en cas de mauvais réglage, l'opérateur force sur toute la ligne de commande qui devra être dimensionnée en conséquence.

Le séquençage permet ainsi de s'affranchir d'un réglage précis des moyens de liaison, rendant le dispositif plus sûr et moins coûteux en termes de fabrication et de maintenance.

Avantageusement, les moyens de séquençage comprennent une came comportant une piste coopérant avec un élément suiveur se déplaçant le long de celle-ci, la piste comportant une partie active et une partie passive de sorte que la transformation du mouvement de pivotement de la came en mouvement de déplacement de l'élément suiveur, ou inversement, soit réalisé sur la seule partie active de la piste.

De cette manière, lors de l'actionnement de la poignée, l'élément suiveur se déplace tout d'abord sur la partie passive de sorte que le second système de verrouillage n'est pas actionné. L'élément suiveur atteint ensuite la partie active de la piste et se déplace le long de cette partie. Le second système de verrouillage est alors actionné tout au long du déplacement de l'élément suiveur sur la partie active et passe d'un état de verrouillage à un état de déverrouillage, ou inversement. Lorsque l'élément suiveur a traversé la partie active de la piste, il atteint alors à nouveau la partie passive et se déplace le long de celle-ci de sorte que le second système de verrouillage n'est plus actionné.

Selon une caractéristique de l'invention, les moyens de liaison comportent un organe de transmission mobile, comprenant une première extrémité liée au premier système de verrouillage et une seconde extrémité liée à la came, l'actionnement du premier système de verrouillage entraînant la translation par traction ou la compression de l'organe de transmission.

Selon une forme de réalisation de l'invention, l'élément suiveur est disposé au niveau de la seconde extrémité de l'organe de transmission, le déplacement de l'élément suiveur sur la partie active de la piste entraînant le pivotement de la came, le second système de verrouillage comportant un pêne relié à la came, actionné par le pivotement de celle-ci.

Ainsi, la came ne pivote que lorsque l'élément suiveur est déplacé le long de la partie active de la piste, entraînant avec elle le déplacement du pêne. La came permet ainsi de transformer le mouvement de déplacement de l'élément suiveur en un mouvement de rotation de la came et de déplacement du pêne.

Préférentiellement, le pêne est mobile en translation et est équipé d'un doigt inséré dans un trou oblong ménagé dans la came.

Le trou oblong permet de compenser les différences de trajectoire entre la zone de liaison de la came avec le pêne et la trajectoire du pêne. En effet, la zone de liaison précitée se déplace selon une trajectoire curviligne dont le centre est le centre de rotation de la came alors que le pêne se déplace de manière rectiligne.

Selon une autre forme de réalisation de l'invention, la came est agencée pour pivoter sur une course déterminée lors du déplacement de la poignée, la came coopérant avec le second système de verrouillage de manière à réaliser son actionnement sur une partie seulement de la course totale de la came.

Avantageusement, la seconde extrémité de l'organe de transmission est reliée à la came de sorte que le déplacement de l'organe de transmission entraîne en rotation la came, le second système de verrouillage comportant un pêne comprenant l'élément suiveur, le pivotement de la came entraînant le déplacement de l'élément suiveur et du pêne lors du déplacement de l'élément suiveur sur la partie active de la piste.

La came permet ainsi de transformer le mouvement de rotation de la came en un mouvement de déplacement de l'élément suiveur et du pêne, lorsque l'élément suiveur atteint la partie active de la piste.

Selon une caractéristique de l'invention, la came est montée sur le second système de verrouillage.

L'invention concerne en outre une nacelle comportant au moins un dispositif de verrouillage selon l'invention.

L'invention concerne également un aéronef équipé d'au moins une nacelle selon l'invention.

De toute façon, l'invention sera bien comprise à l'aide de la description qui suit en référence au dessin schématique annexé représentant, à titres d'exemples, plusieurs formes de réalisation de ce dispositif de verrouillage.
Figure 1 est une vue schématique éclatée, en perspective, de la nacelle équipé de dispositifs de verrouillage selon l'invention.
Figures 2 à 9 sont des vues illustrant une première forme de réalisation du dispositif, dans lesquelles

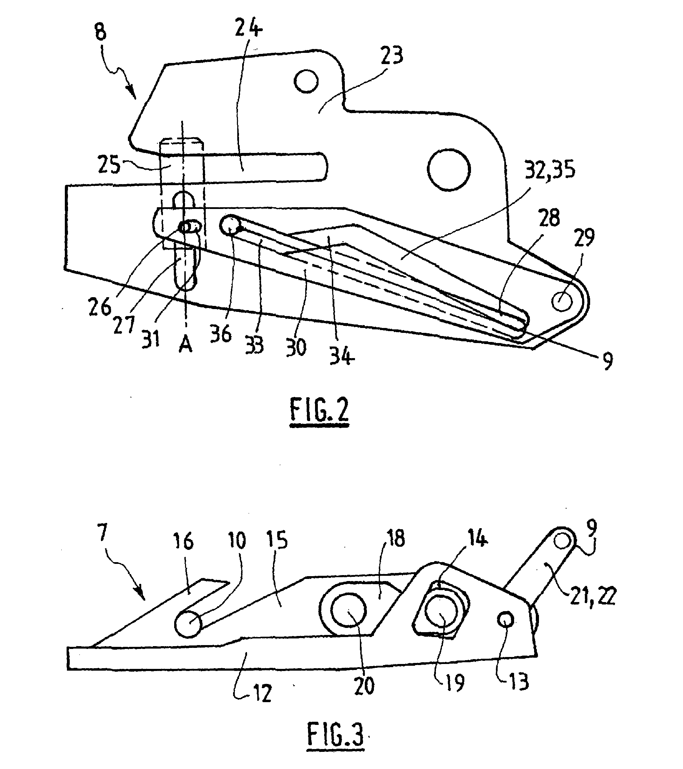

Figure 2 est une vue de face du second système de verrouillage, dans une première position ;
Figure 3 est une vue de face du premier dispositif de verrouillage, dans la première position ;

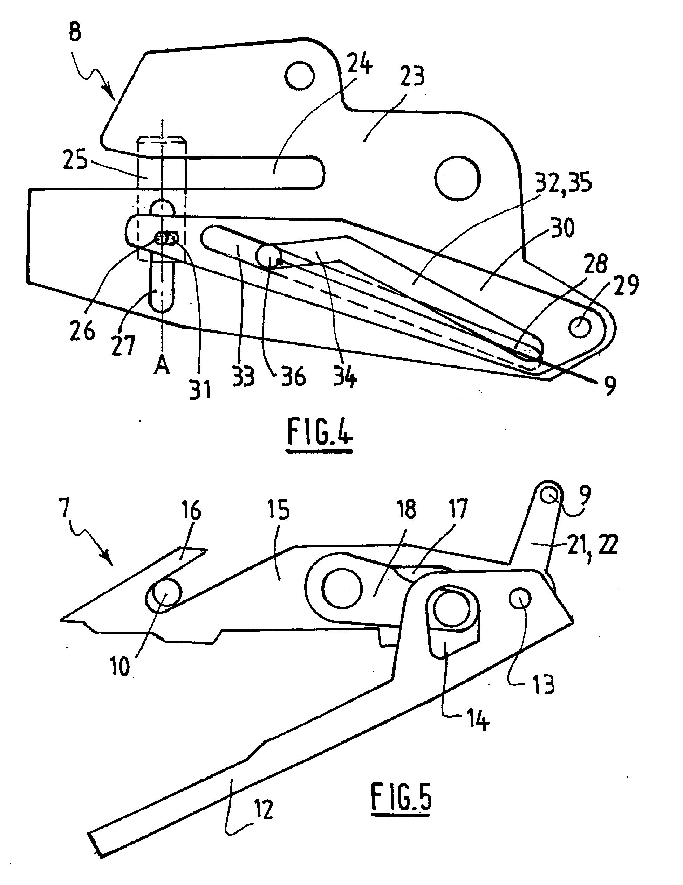

Figures 4-5, 6-7 et 8-9 sont des vues correspondant aux figures 2-3, respectivement dans trois positions successives du dispositif de verrouillage ;

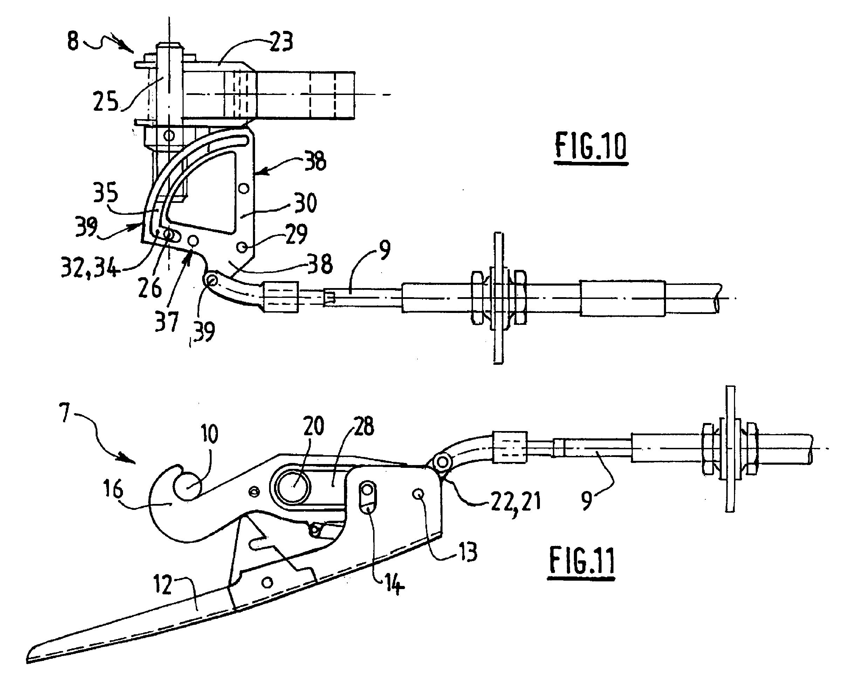

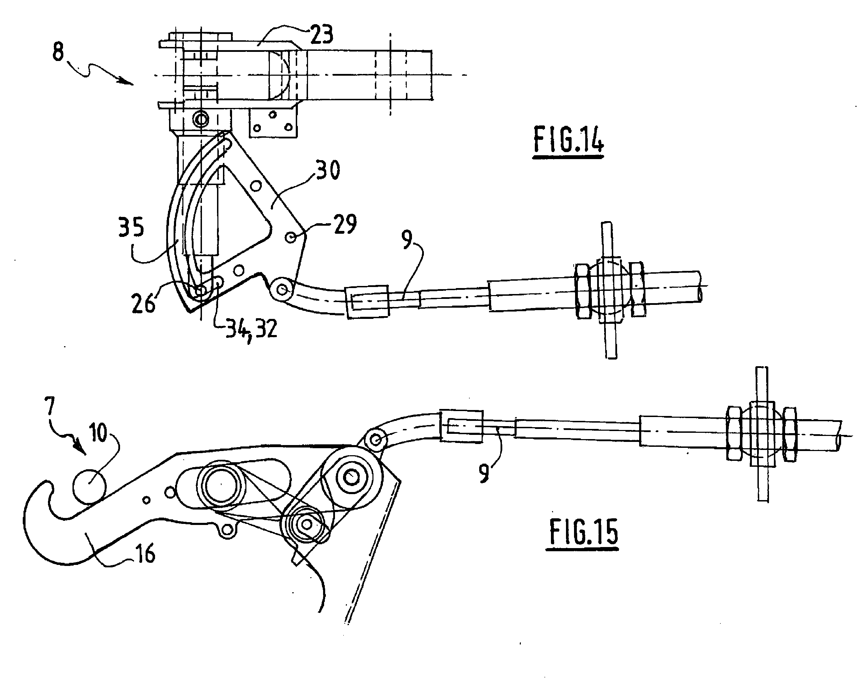

Figures 10 à 19 sont des vues illustrant une seconde forme de réalisation du dispositif, dans lesquelles
Figures 10 et 11 sont des vues correspondant aux figures 2 et 3 ;

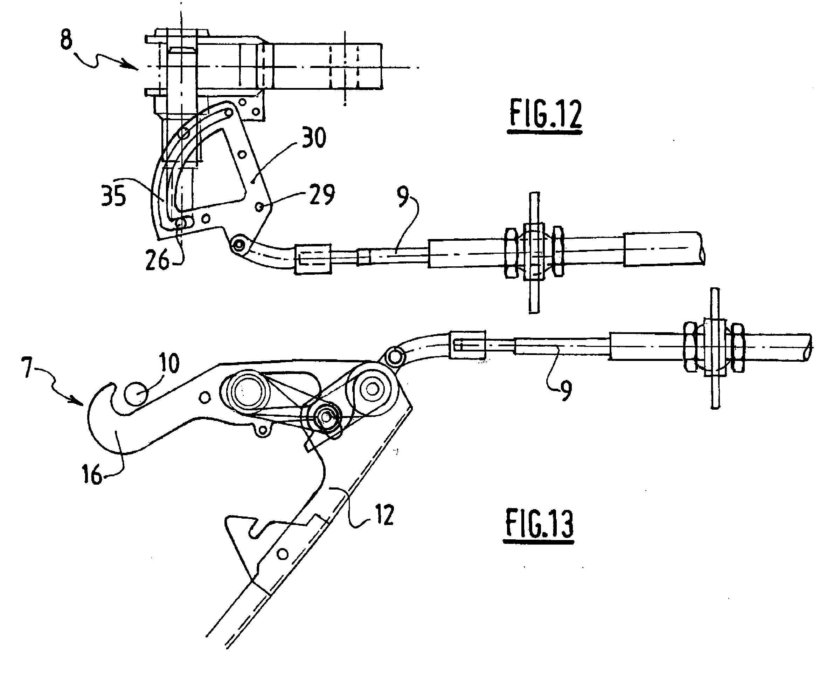

Figures 12-13, 14-15, 16-17 et 18-19 sont des vues correspondant aux figures 10-11, respectivement dans quatre positions successives du dispositif de verrouillage ;

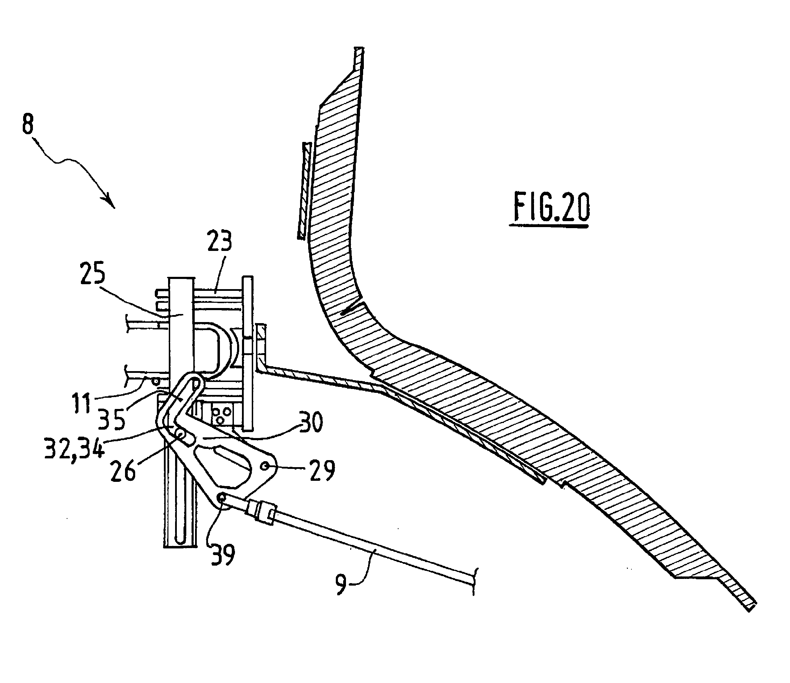

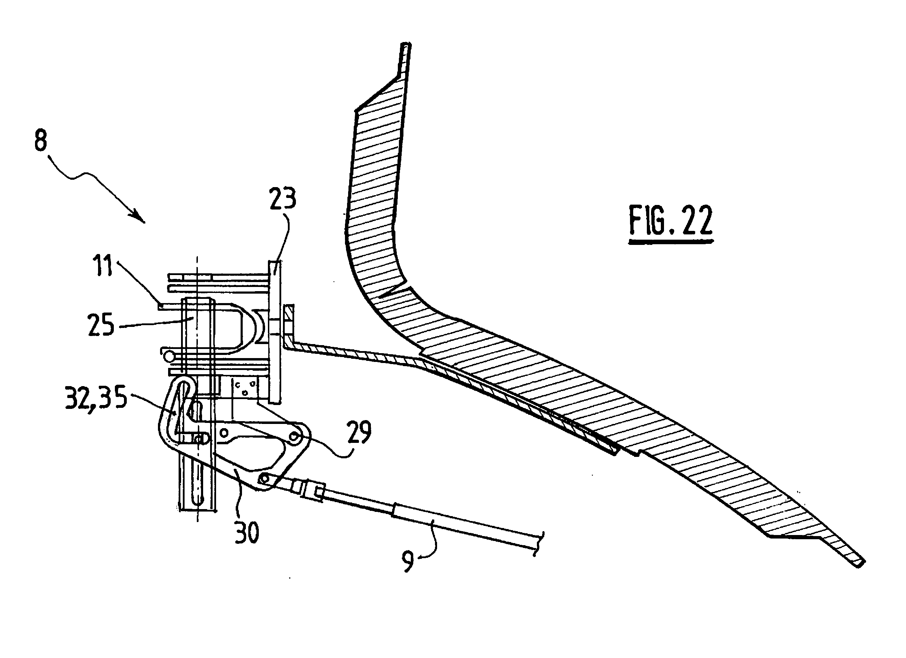

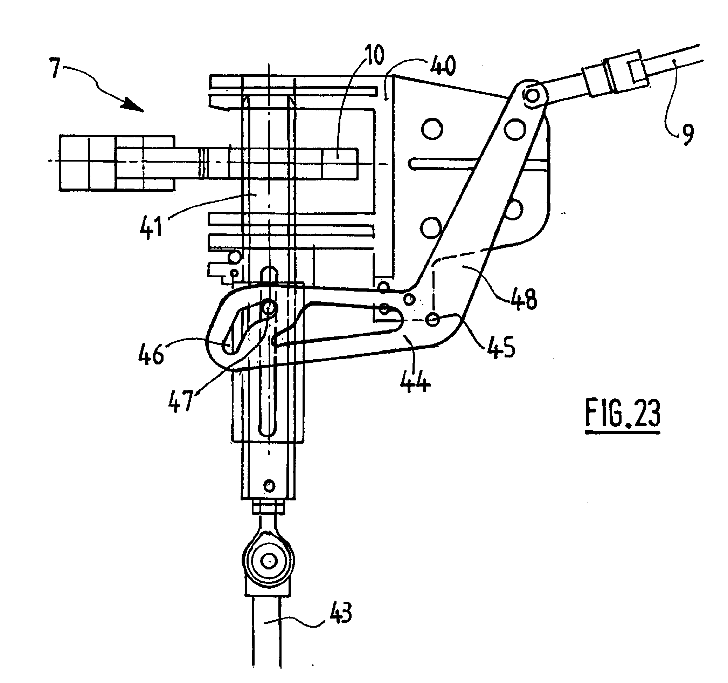

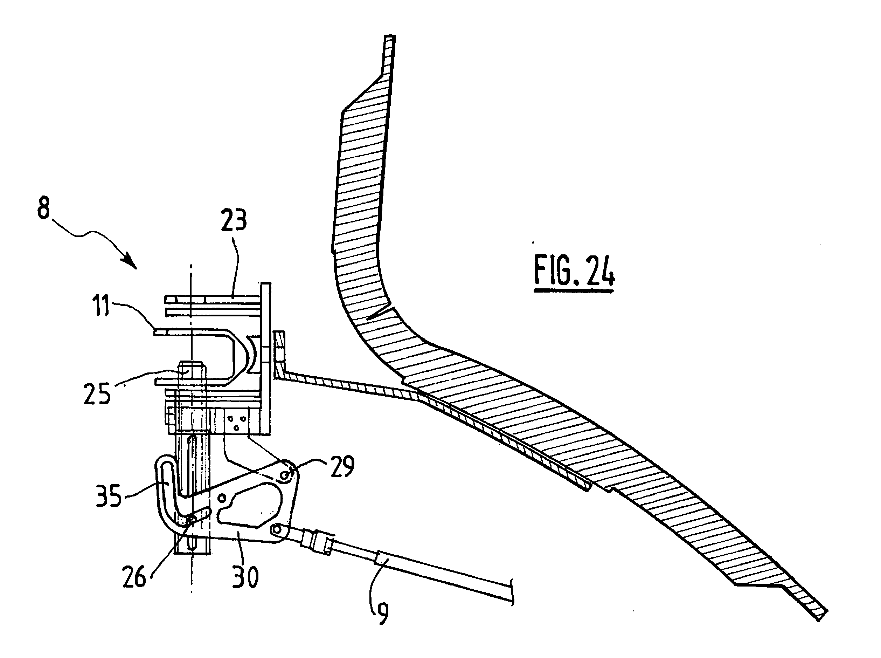

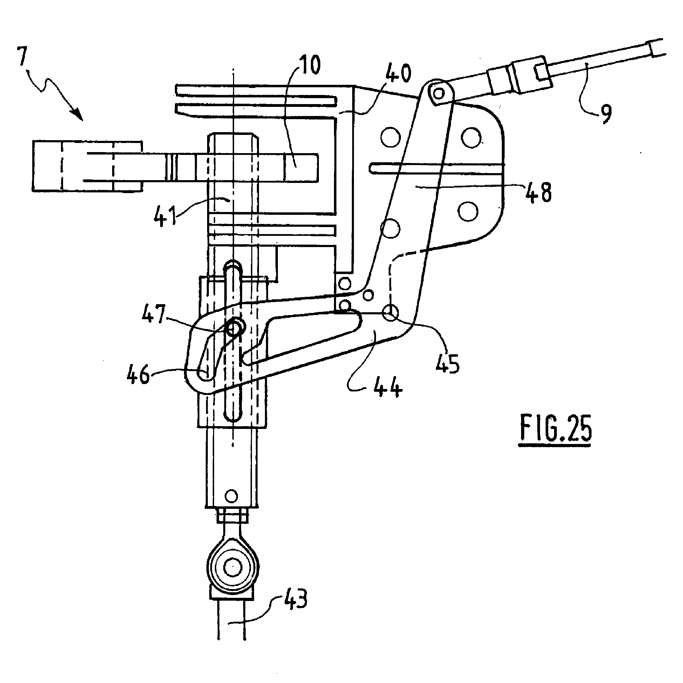

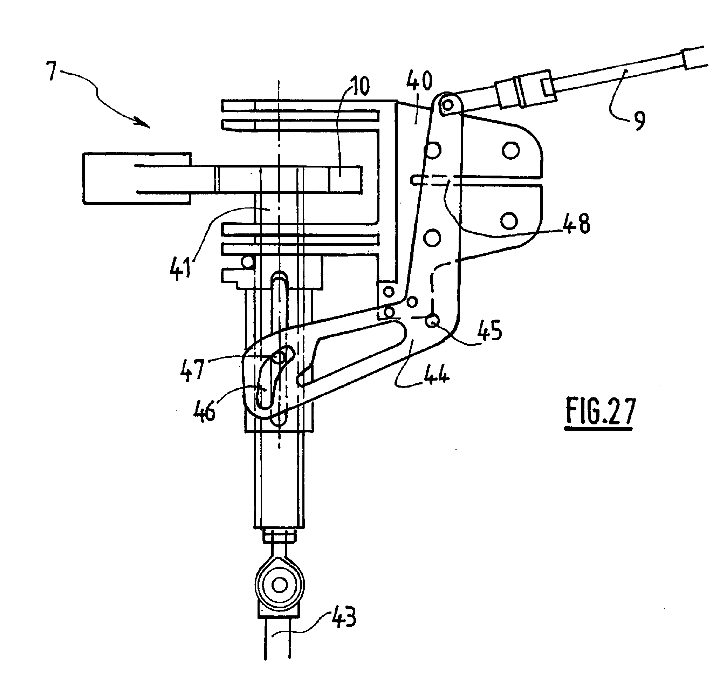

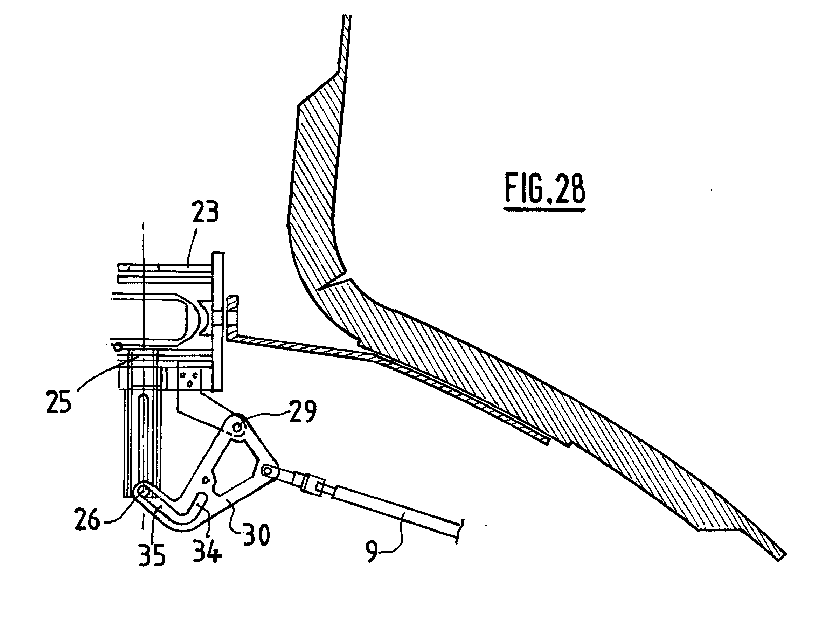

Figures 20-29 sont des vues illustrant une troisième forme de réalisation du dispositif, correspondant respectivement aux figures 10 à 19.

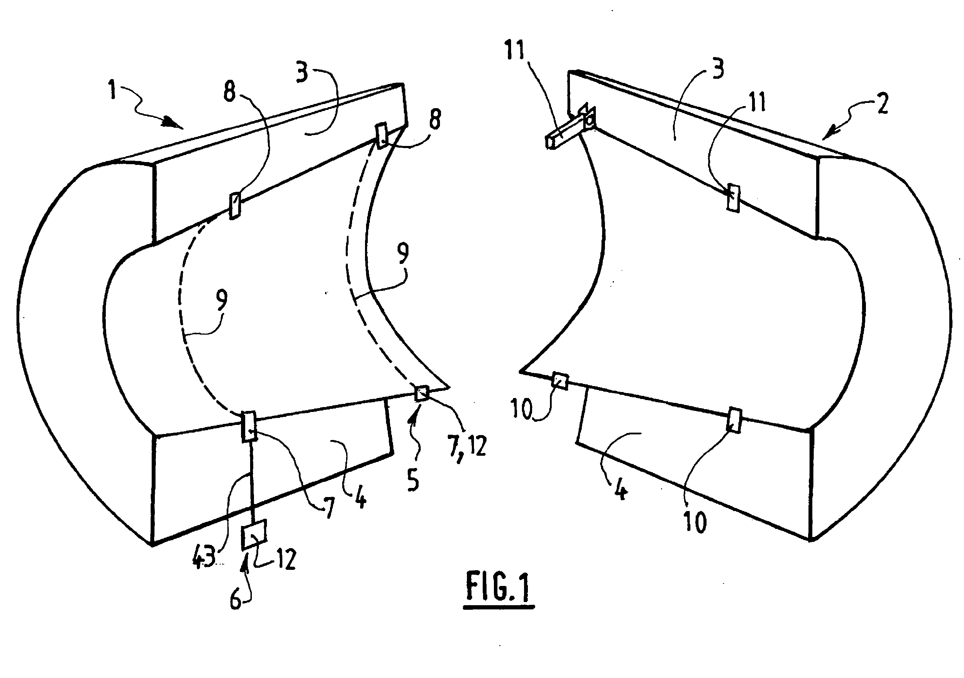

La figure 1 représente une vue éclatée de la section arrière d'une nacelle. Celle-ci comporte, comme cela est connu de l'homme du métier, un premier et un second éléments mobiles 1, 2, articulés au niveau de leur partie supérieure sur un mat d'un aéronef, non représenté.

Chaque élément articulé 1, 2 présente la forme générale d'un demi cylindre creux, délimitant deux zones de jonction 3, 4 avec l'élément articulé lui faisant face à savoir une zone de jonction supérieure 3 et une zone de jonction inférieure 4.

Les positions inférieures et supérieures sont également appelées respectivement positions 6 heures et 12 heures.

La nacelle est équipée d'un premier et d'un second dispositifs de verrouillage 5, 6.

II est à noter que, pour des raisons de présentation, seuls deux de ces dispositifs sont représentés.

Chaque dispositif de verrouillage 5, 6 comporte un premier système de verrouillage 7 ainsi qu'un second système de verrouillage 8, relié au premier par des moyens de liaison 9 agencés pour actionner le second système de verrouillage 8 du fait de l'actionnement du premier 7.

Chaque système de verrouillage 7, 8 est monté sur le premier élément mobile 1 et est apte à se verrouiller sur un organe de retenue correspondant 10, 11, monté sur le second élément mobile 2.

Les premier et le second systèmes de verrouillage 7, 8 de chaque dispositif de verrouillage 5, 6 sont montés respectivement dans les zones de jonction inférieure et supérieure 4, 3 du premier élément articulé 1.

La structure et le fonctionnement du premier dispositif de verrouillage 5 selon une première forme de réalisation de l'invention vont maintenant être décrits plus en détail en référence aux figures 2 à 9.

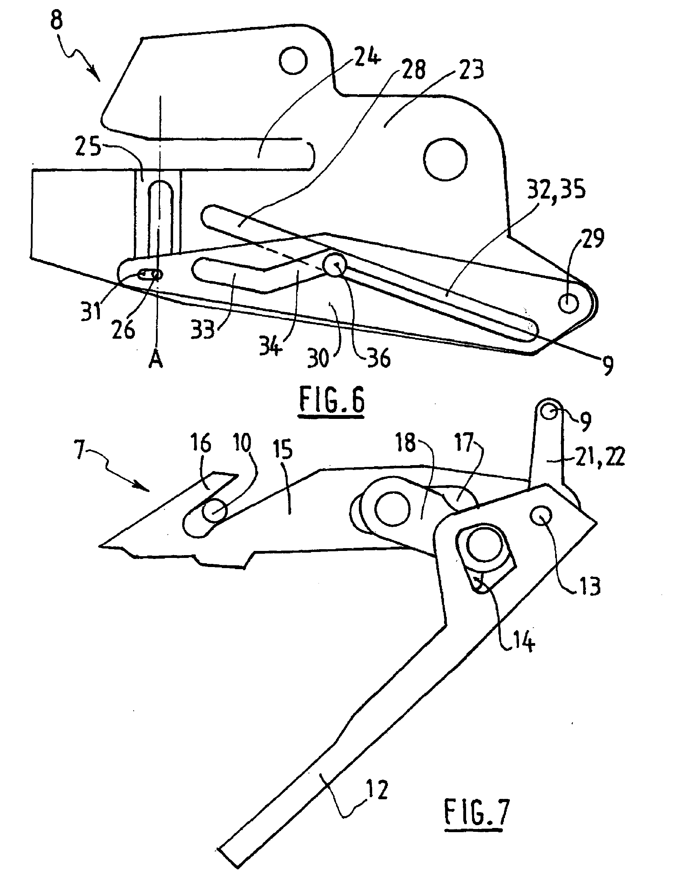

Comme cela est représenté à la figure 3, le premier système de verrouillage 7 comporte une poignée 12 de commande destinée à être actionnée par un opérateur. La poignée 12 est montée pivotante sur un axe 13 et comporte une lumière 14. Le premier système de verrouillage 7 comporte en outre un élément 15 présentant un crochet 16 à proximité d'une première extrémité et monté pivotant au niveau d'une seconde extrémité sur l'axe 13. Cet élément 15 présente en outre une lumière oblongue 17 au niveau de sa partie médiane, visible plus particulièrement à la figure 7. Le crochet 16 est destiné à venir en prise avec l'organe de retenue 10 du second élément articulé 2 de la nacelle.

Le premier système de verrouillage 7 comporte également une biellette 18 articulée au niveau d'une première et d'une seconde extrémités autour d'un premier et d'un second axes 19, 20 faisant saillie respectivement à l'intérieur de la lumière 14 de la poignée 12 et de la lumière oblongue 17 de l'élément 15 présentant le crochet 16. Les axes 19, 20 sont déplaçables à l'intérieur de chacune des lumières 14, 17. En outre, le second axe 20 est fixe par rapport au premier élément articulé 1 de la nacelle.

Le premier système de verrouillage 7 comporte de plus un organe de transformation de mouvement 21 monté pivotant sur l'axe 13 et articulé sur le premier axe 19 de la biellette 18. L'organe de transformation de mouvement 21 comporte en outre un bras 22. Les moyens de liaison comportent un câble flexible 9 symbolisé par un trait pour des raisons de lisibilité du dessin. Le câble 9 présente une première et une seconde extrémités, la première extrémité étant monté articulée sur l'extrémité libre du bras 21.

Comme cela est représenté à la figure 2, le second système de verrouillage 8 comporte un corps 23 fixe par rapport au premier élément articulé 1 de la nacelle.

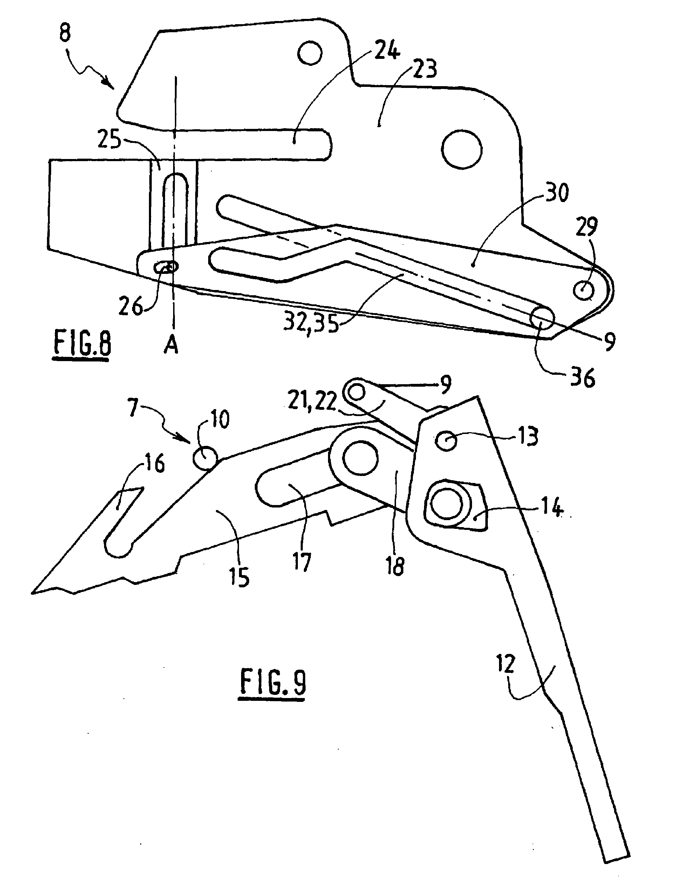

Le corps 23 comporte une fente 24 permettant l'insertion de l'organe de retenue correspondant 11, un pêne 25 étant monté déplaçable en translation sur le corps, selon un axe A perpendiculaire à la fente 24, entre une position de verrouillage dans laquelle le pêne 25 traverse la fente 24 ou fait saillie à l'intérieure de celle-ci, comme cela est représenté en figure 2, et une position de déverrouillage dans laquelle le pêne 25 est complètement logé à l'intérieur du corps 23 et ne fait pas ou quasiment pas saillie dans la fente 24, représentée aux figures 6 et 8.

Le pêne 25 comporte un plot 26 faisant saillie perpendiculairement à l'axe A et à la fente 24, au travers d'une lumière oblongue 27 ménagée dans le corps 23 suivant l'axe A de manière à permettre le déplacement du pêne 25.

Le corps 23 comporte en outre une ouverture oblongue ou une rainure 28, s'étendant obliquement par rapport à la fente 24 et à la lumière oblongue 27, entre une première extrémité située au voisinage de la fente 24 et de la lumière oblongue 27 et une seconde extrémité située au voisinage d'un axe d'articulation 29 dont la fonction est décrite ci-après.

Le dispositif de verrouillage comporte en outre des moyens de séquençage comportant une came 30 de forme allongée, comportant une première et une seconde extrémités. La came 30 est montée pivotante au niveau de sa première extrémité, sur le corps 23 du second système de verrouillage 8, autour de l'axe 29. La came 30 comporte en outre un trou oblong 31 au niveau de sa seconde extrémité, le plot 26 du pêne 25 faisant saillie à l'intérieur du trou oblong 31 de sorte que ce dernier s'étende sensiblement perpendiculairement à l'axe A de déplacement du pêne 25.

La came 30 comporte en outre une piste 32 formée par une lumière oblongue en forme générale de marche d'escalier. La piste 32 présente ainsi trois parties successives, à savoir une première partie 33 passive, une seconde partie 34 active et une troisième partie 35 passive, dont la fonction est détaillée ci-après.

Le câble 9, représenté schématiquement par un trait, comporte un doigt 36 au niveau de sa seconde extrémité, le doigt 36 étant inséré dans la piste 32 de la came 30 et dans la rainure 28 du corps 23, de manière à former un élément suiveur.

On décrira ci-après les étapes successives d'ouverture du dispositif de verrouillage, illustrées aux figures 2 à 9.

Les figures 2 et 3 représentent la position verrouillée de celui-ci, dans laquelle le premier et le second systèmes de verrouillage 7, 8 sont tous deux verrouillés. Dans cette position, la poignée 12 est en position fermée, c'est-à-dire rapprochée de l'élément 15 présentant le crochet 16, le doigt suiveur 36 étant située dans la première partie passive 33 de la piste 32, au niveau de l'extrémité de la piste. La came 30 est disposée dans une première position angulaire dans laquelle le pêne 25 qui lui est relié est en position haute, c'est-à-dire traverse la fente 24.

Comme cela est représenté aux figures 4 et 5, lorsque l'utilisateur actionne la poignée 12 de manière à l'ouvrir, le bras 22 pivote dans le sens anti-horaire de manière à déplacer le câble 9 en translation, par traction sur celui-ci. Le doigt suiveur 36 est alors déplacé le long de la première partie passive 33 de la piste 32. Durant ce déplacement, la came 30 ne pivote pas, la première partie passive 33 de la piste 32 coïncidant alors avec la rainure 28 ménagée dans le corps 23.

Lorsque l'opérateur continue d'actionner la poignée 12, le premier axe 19 de la biellette 18 vient en butée contre le bord de la lumière 14 de la poignée 12 et est entraîné par le mouvement de celle-ci. La biellette 18 est alors déplacée de sorte que le second axe 20 de celle-ci se translate dans la lumière oblongue 17 de l'élément 15 comportant le crochet 16.

Le deuxième axe 20 précité étant fixe, l'élément 15 comportant le crochet 16 se déplace de manière à ce que l'élément de retenue 10 commence à se dégager du crochet 16. Dans cette position, le premier système de verrouillage 7 est toujours verrouillé puisque l'élément de retenue 10 n'est pas complètement dégagé du crochet 16.

En continuant le mouvement d'ouverture de la poignée, le bras 22 continue d'entraîner en translation le câble 9 de sorte que le doigt suiveur 36 se déplace le long de la seconde partie active 34 de la piste 32, d'une extrémité à l'autre de celle-ci. Comme vu précédemment, la seconde partie active 34 est orientée obliquement par rapport à la première partie passive 33 et le doigt suiveur 36 est inséré dans la rainure 28 du corps 23 fixe. La came 30 est ainsi entraînée en rotation dans le sens anti-horaire autour de l'axe 29 et déplace le pêne 25 en position basse. Lors de ce déplacement, le plot 26 du pêne 25 translate dans le trou oblong 31 de la came 30, ce qui permet de compenser les écarts de trajectoires entre la trajectoire curviligne de l'extrémité de la came 30 rattachée au pêne 25 et la trajectoire rectiligne A de ce dernier.

Comme cela est représenté en figure 6, le pêne 25 est dégagé de la fente 24 lorsque le doigt suiveur 36 a traversé la partie active 34 de la piste 32. Ainsi, le second système de verrouillage 8 est déverrouillé alors même que le premier 7 est encore verrouillé, car l'organe de retenue 10 est toujours engagée dans le crochet 16.

Comme cela est représenté aux figures 8 et 9, lorsque l'opérateur continue d'actionner la poignée 12, l'élément de retenue 10 se dégage complètement du crochet 16 de sorte que le premier système de verrouillage 7 est déverrouillé. De même que précédemment, le bras 22 continue d'entraîner en translation le câble 9 de sorte que le doigt suiveur 36 se déplace le long de la troisième partie passive 35 de la piste 32. Cette partie passive 35 s'étend alors suivant l'axe de la rainure 28 du corps 23 de sorte que le déplacement du doigt suiveur 36 n'engendre pas le pivotement de la came 30. Par conséquent, le pêne 25 n'est pas déplacé.

Ainsi, comme cela est décrit ci-dessus, le premier dispositif de verrouillage 5 est séquencé. En effet, lors de l'ouverture de la poignée 12, l'opérateur déverrouille d'abord le second système de verrouillage 8, puis le premier système de verrouillage 7. On évite ainsi les erreurs de manipulation présentées dans la partie introductive.

On comprendra aisément que, lors de la fermeture de la poignée 12, l'opérateur verrouille tout d'abord le premier système de verrouillage 7 et verrouille ensuite le second système de verrouillage 8.

Les figures 10 à 19 illustrent une seconde forme de réalisation, correspondant également au premier dispositif de verrouillage dont la position dans la nacelle est représentée en figure 1.

Pour faciliter la compréhension, les éléments ont été désignés par les mêmes références que précédemment.

Comme cela apparaît en figure 11, le premier système de verrouillage présente une structure similaire à celui illustré en figure 3.

Le second système de verrouillage est représenté en figure 10. Comme précédemment, le pêne 25 est monté déplaçable dans le corps 23, le plot 26 faisant saillie vers l'extérieur depuis le pêne 25. En outre, la came 30 est également montée pivotante autour de l'axe 29.

Dans cette forme de réalisation, la came 30 présente une forme générale de quart de disque, comportant un premier et un second bords adjacents 37, 38 formant sensiblement un angle droit l'un par rapport à l'autre, reliés par un bord périphérique 39 en arc de cercle.

La came 30 est montée pivotante à proximité de la zone à angle droit.

Le premier bord 37 comporte, à proximité de la zone à angle droit, une patte 38 faisant saillie vers l'extérieur, dont l'extrémité libre est reliée par un axe d'articulation 39 à la seconde extrémité du câble 9.

Par conséquent, le déplacement du câble 9 entraîne le pivotement de la came 30 autour de l'axe 29.

De même que précédemment, la came 30 comporte une piste 32 sous la forme d'une lumière, présentant une partie active 34 et une partie passive 35.

La partie passive 35 de la piste 32 s'étend selon un arc de cercle parallèle en retrait par rapport au bord périphérique 39 de la came 30 et dont le centre correspond à l'axe 29. La partie active 34 de la piste 32 s'étend sensiblement parallèlement au premier bord 37 de la came 30, depuis la partie passive 35 de manière à former une piste continue.

Le plot 26 du pêne 25 est inséré dans la piste 32 et forme ainsi un élément suiveur.

Comme cela est représenté successivement aux figures 10 à 15, l'ouverture de la poignée 12 par l'opérateur permet d'exercer une traction sur le câble 9 par l'intermédiaire du bras 22 de sorte que le câble 9 entraîne la came 30 en rotation dans le sens anti-horaire. Lors de cette rotation, le plot 26 du pêne 25 se déplace le long de la partie active 34, entraînant le pêne 25 en translation vers le bas de manière à réaliser l'ouverture du second système de verrouillage 8.

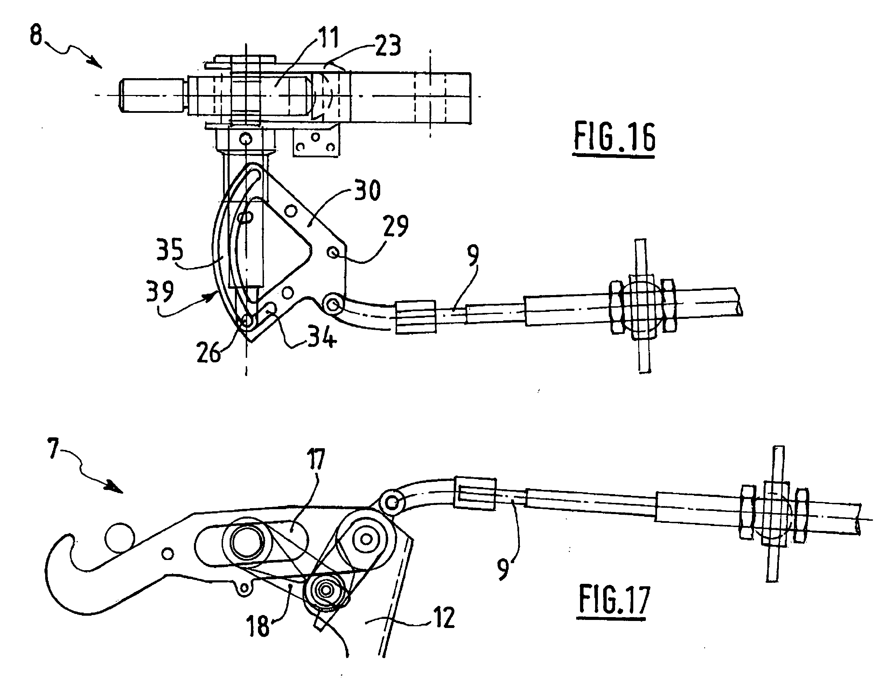

La figure 16 représente le second système de verrouillage 8 en position complètement déverrouillée dans laquelle le plot suiveur 26 ayant traversé l'ensemble de la partie active 34 de la piste s'introduit dans la partie passive 35. Il est alors possible d'engager ou de dégager l'organe de retenue 11 fixé à la seconde partie mobile 2 de la nacelle.

A partir de cette position, lorsque l'opérateur continue d'ouvrir la poignée 12 et par conséquent de faire pivoter la came 30, le plot suiveur 26 se déplace dans la partie passive 35 de la piste 32. Ce déplacement n'entraîne pas le déplacement du pêne 25.

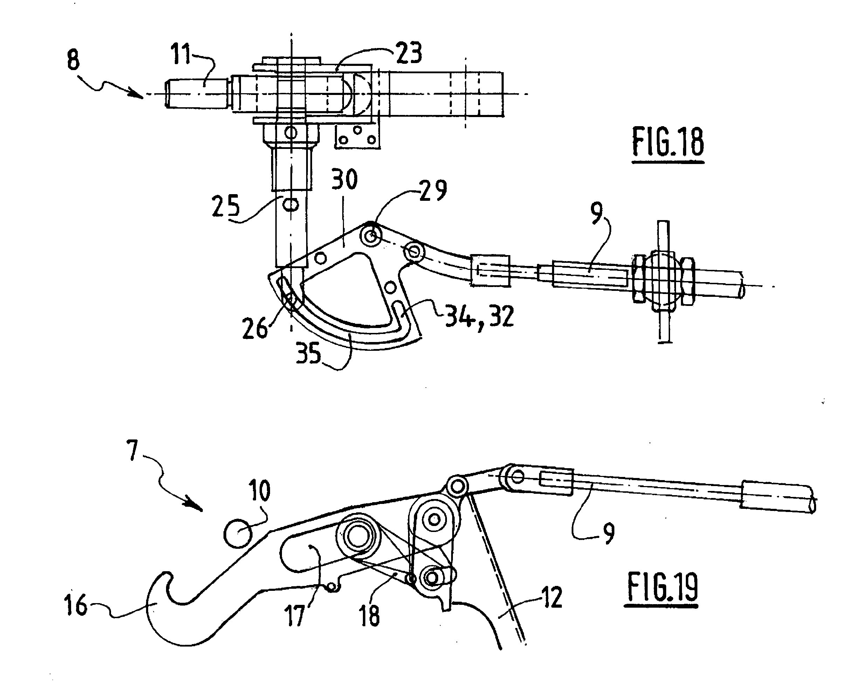

De même que précédemment, lorsque la poignée s'est déplacée sur la totalité de sa course, comme cela est représenté aux figures 18 et 19, le crochet 16 est complètement dégagé de l'élément de retenue 10 correspondant de manière à déverrouiller le premier système de verrouillage 7.

Cette seconde forme de réalisation permet donc à nouveau un séquençage entre l'actionnement du premier et du second systèmes de verrouillage 7, 8 de sorte que, lors de l'ouverture de la poignée 12, l'opérateur déverrouille tout d'abord le second système de verrouillage 8 puis déverrouille ensuite le premier système de verrouillage 7.

De même que précédemment, le verrouillage de ce dispositif est obtenu par la succession inverse des étapes précitées.

Une troisième forme de réalisation est illustrée aux figures 20 à 29. Cette troisième forme de réalisation correspond au second dispositif de verrouillage 6 dont la position est illustrée en figure 1. Pour faciliter la compréhension, les éléments ont été désignés par les mêmes références que précédemment.

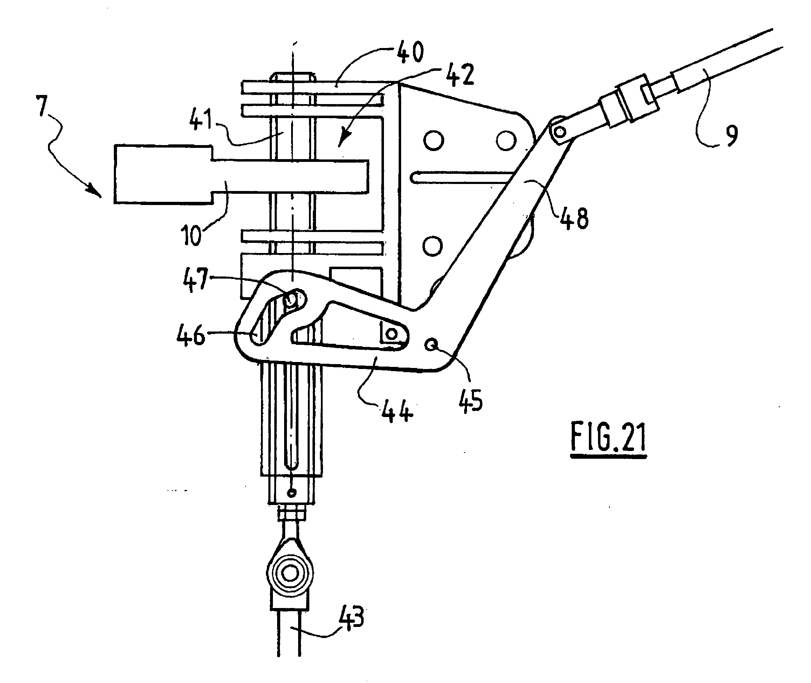

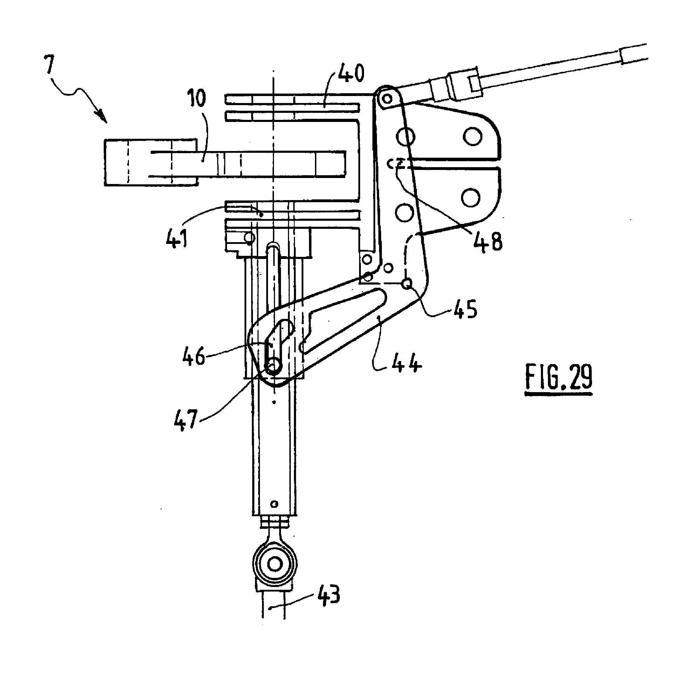

Le premier système de verrouillage 7 est représenté à la figure 21. Celui-ci comporte un corps 40 fixe par rapport à l'élément mobile 1 et équipé d'un pêne 41 monté déplaçable en translation sur le corps, apte à être déplacé entre une première position de verrouillage représentée en figure 21 dans laquelle le pêne 41 traverse une fente 42 destinée à l'insertion de l'organe de retenue correspondant 10, et une position de déverrouillage représentée en figure 29 dans laquelle le pêne 41 est en retrait par rapport à la fente 42.

La translation du pêne 41 est actionnée par l'utilisateur, par l'intermédiaire d'une poignée 12, représentée en figure 1, reliée au pêne 41 par une tige 43.

Le second dispositif de verrouillage 6 comporte en outre un organe de transformation de mouvement 44, monté sur le premier système de verrouillage 7, permettant de transformer le mouvement de translation de la poignée 12 et du pêne 41 en un mouvement de translation par traction ou compression du câble 9.

L'élément de transformation de mouvement 44 est de forme allongée, comporte une première extrémité montée pivotante sur le corps 40 du premier système de verrouillage, autour d'un axe 45, et comporte une seconde extrémité au niveau de laquelle est ménagée une lumière 46. Selon une forme de réalisation, la lumière 46 comprend une partie passive et une partie active.

En outre, le pêne 41 comporte un plot suiveur 47 faisant saillie à l'intérieure de la lumière 46.

L'élément de transformation de mouvement 44 présente en outre un bras 48 faisant saillie vers l'extérieur au niveau de la première extrémité, l'extrémité libre du bras étant reliée à la première extrémité du câble 9.

Le second système de verrouillage 8 est illustré à la figure 20. Dans cette forme de réalisation, la came 30 est montée pivotante autour de l'axe 29, la seconde extrémité du câble 9 étant reliée à la came 30 au niveau de l'axe 39.

La piste 32 de la came 20 présente une forme similaire à celle de la seconde forme de réalisation, c'est-à-dire comporte une partie passive 35 en forme d'arc de cercle dont le centre correspond à l'axe de pivotement 29 de la came 30, à partir de laquelle s'étend une partie active 34 droite.

Le fonctionnement et la cinématique du second système de verrouillage 8 de cette troisième forme de réalisation de l'invention sont similaires à ceux de la seconde forme de réalisation décrite précédemment.

Le fonctionnement du second dispositif de verrouillage 6 est maintenant décrit ci-après.

Lorsque l'utilisateur exerce une traction sur la poignée de commande 12, le pêne 41 est déplacé vers le bas, entraînant l'élément de transformation de mouvement 44 en rotation dans le sens anti-horaire. Ce dernier entraîne alors en translation le câble 9 relié à la came 30. Celle-ci est ainsi entraînée en rotation dans le sens anti-horaire, le plot suiveur 26 du pêne 25 traversant la partie active 34 de la piste 32 de manière à déplacer le pêne 25 vers le bas, c'est-à-dire de manière à déverrouiller le second système de verrouillage 8. La partie active 34 est prolongée par une surcourse formant une partie passive additionnelle, nécessaire afin de compenser les écarts de positionnement entre les différents composants.

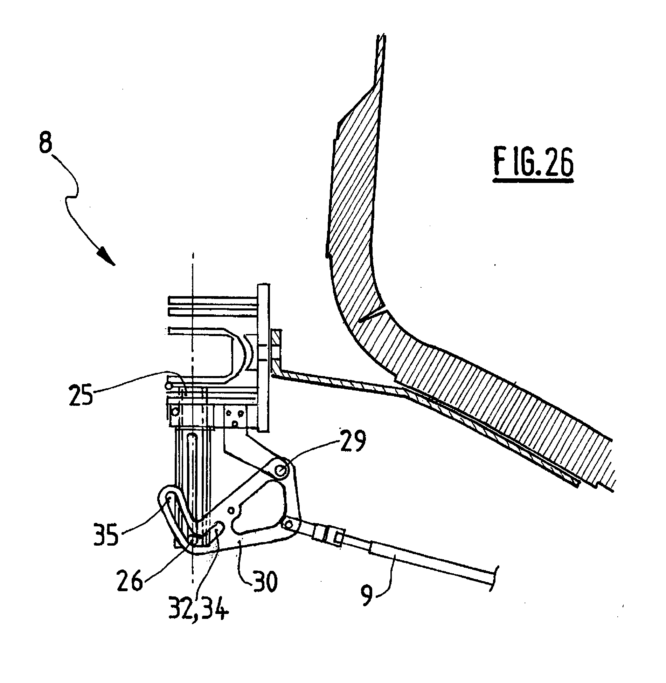

Cette position est représentée en figure 26. La course du pêne 41 du premier système de verrouillage 7 ainsi que la forme de la lumière 46 de l'élément de transformation de mouvement 44 sont agencés de manière à ce qu'une partie seulement de la course de la poignée 12 nécessaire à l'ouverture complète du premier système de verrouillage 7 soit suffisante pour que le plot suiveur 26 traverse la partie active 34 de la piste 32, c'est-à-dire pour déverrouiller le second système de verrouillage 8.

Lorsque l'utilisateur continue d'exercer une traction sur la poignée 12, le pêne 41 continue son mouvement de translation vers le bas jusqu'à ce que celui-ci atteigne la position de déverrouillage représentée en figure 29. Lors de ce mouvement de la poignée 12, la came 30 est pivotée de sorte que le doigt suiveur 26 du pêne 25 du second système de verrouillage 8 se déplace le long de la partie passive 35 de la piste 32, le pêne 25 n'étant alors pas déplacé en translation.

De même que précédemment, le déverrouillage du second dispositif de verrouillage est réalisé de façon séquencée, le verrouillage étant obtenu par la succession inverse des étapes précitées.

## Revendications

1. Dispositif de verrouillage (5, 6) comportant un premier système de verrouillage (7) équipé d'une poignée de commande (12), destinée à être actionnée par un opérateur, **caractérisé en ce qu'**il comporte un second système de verrouillage (8), relié au premier (7) par des moyens de liaison (9) agencés pour actionner le second système de verrouillage (8) du fait de l'actionnement du premier (7), le premier système de verrouillage (7) étant actionné alternativement entre un état de verrouillage et un état de déverrouillage par déplacement de la poignée (12) sur la totalité d'une course déterminée, les moyens de liaison (9) comportant des moyens de séquençage (30, 32) agencés pour actionner le second système de verrouillage (8), respectivement entre un état de verrouillage et un état de déverrouillage de celui-ci, lors du déplacement de la poignée (12) sur une partie seulement de la course de celle-ci.

2. Dispositif selon la revendication 1, **caractérisé en ce que** les moyens de séquençage comprennent une came (30) comportant une piste (32) coopérant avec un élément suiveur (26, 36) se déplaçant le long de celle-ci, la piste comportant une partie active (34) et une partie passive (33, 35) de sorte que la transformation du mouvement de pivotement de la came (30) en mouvement de déplacement de l'élément suiveur (26, 36), ou inversement, soit réalisé sur la seule partie active (34) de la piste (32).

3. Dispositif selon la revendication 2, **caractérisé en ce que** les moyens de liaison (9) comportent un organe de transmission mobile, comprenant une première extrémité liée au premier système de verrouillage (7) et une seconde extrémité liée à la came (30), l'actionnement du premier système de verrouillage (7) entraînant la translation par traction ou compression de l'organe de transmission (9).

4. Dispositif selon la revendication 3, **caractérisé en ce que** l'élément suiveur (36) est disposé au niveau de la seconde extrémité de l'organe de transmission (9), le déplacement de l'élément suiveur (36) sur la partie active (34) de la piste (32) entraînant le pivotement de la came (30), le second système de verrouillage (8) comportant un pêne (25) relié à la came (30), actionné par le pivotement de celle-ci.

5. Dispositif selon la revendication 4, **caractérisé en ce que** le pêne (25) est mobile en translation (A) et est équipé d'un doigt (26) inséré dans un trou oblong (31) ménagé dans la came (30).

6. Dispositif selon la revendication 3, **caractérisé en ce que** la came (30) est agencée pour pivoter sur une course déterminée lors du déplacement de la poignée (12), la came (30) coopérant avec le second système de verrouillage (8) de manière à réaliser son actionnement sur une partie seulement de la course totale de la came (30).

7. Dispositif selon l'une des revendications 3 et 6, **caractérisé en ce que** la seconde extrémité de l'organe de transmission (9) est reliée à la came (30) de sorte que le déplacement de l'organe de transmission (9) entraîne en rotation la came (30), le second système de verrouillage (8) comportant un pêne (25) comprenant l'élément suiveur (26), le pivotement de la came (30) entraînant le déplacement de l'élément suiveur (26) et du pêne (25) lors du déplacement de l'élément suiveur (26) sur la partie active (34) de la piste (32).

8. Dispositif selon l'une des revendications 2 à 7, **caractérisé en ce que** la came (30) est montée sur le second système de verrouillage (8).

9. Nacelle, **caractérisée en ce qu'**elle comporte au moins un dispositif de verrouillage (5, 6) selon l'une des revendications 1 à 8.

10. Aéronef, **caractérisé en ce qu'**il est équipé d'au moins une nacelle selon la revendication 9.

## Claims

1. A locking device (5, 6) comprising a first locking system (7) fitted with a control handle (12), designed to be actuated by an operator, **characterized in that** it comprises a second locking system (8), connected to the first (7) by linking means (9) arranged to actuate the second locking system (8) via the actuation of the first (7), the first locking system (7) being actuated alternately between a locked state and an unlocked state by the displacement of the handle (12) over the whole of a determined travel, the linking means (9) comprising sequencing means (30, 32) arranged to actuate the second locking system (8), respectively between a locked state and an unlocked state of the latter, when the handle (12) is moved over only a portion of the travel of the latter.

2. The device as claimed in claim 1, **characterized in that** the sequencing means comprise a cam (30) comprising a track (32) interacting with a follower element (26, 36) moving along the latter, the track comprising an active portion (34) and a passive portion (33, 35) so that the transformation of the pivoting movement of the cam (30) into a displacement movement of the follower element (26, 36), or vice versa, takes place over only the active portion (34) of the track (32).

3. The device as claimed in claim 2, **characterized in that** the linking means comprise a movable transmission member (9), comprising a first end connected to the first locking system (7) and a second end connected to the cam (30), the actuation of the first locking system (7) causing the translation by traction or compression of the transmission member (9).

4. The device as claimed in claim 3, **characterized in that** the follower element (36) is placed at the second end of the transmission member (9), the displacement of the follower element (36) over the active portion (34) of the track (32) causing the pivoting of the cam (30), the second locking system (8) comprising a bolt (25) connected to the cam (30), actuated by the pivoting of the latter.

5. The device as claimed in claim 4, **characterized in that** the bolt (25) can be moved in translation (A) and is fitted with a finger (26) inserted into an oblong hole (31) arranged in the cam (30).

6. The device as claimed in claim 3, **characterized in that** the cam (30) is arranged in order to pivot over a determined travel when the handle (12) is displaced, the cam (30) interacting with the second locking system (8) so as to achieve its actuation over only a portion of the total travel of the cam (30).

7. The device as claimed in one of claims 3 and 6, **characterized in that** the second end of the transmission member (9) is connected to the cam (30) so that the displacement of the transmission member (9) rotates the cam (30), the second locking system (8) comprising a bolt (25) comprising the follower element (26), the pivoting of the cam (30) causing the displacement of the follower element (26) and of the bolt (25) when the follower element (26) is displaced over the active portion (34) of the track (32).

8. The device as claimed in one of claims 2 to 7, **characterized in that** the cam (30) is mounted on the second locking system (8).

9. A nacelle, **characterized in that** it comprises at least one locking device (5, 6) as claimed in one of claims 1 to 8.

10. An aircraft, **characterized in that** it is fitted with at least one nacelle as claimed in claim 9.

## Patentansprüche

1. Verriegelungsvorrichtung (5, 6), umfassend ein erstens Verriegelungssystem (7), ausgestattet mit einem Betätigungsgriff (12), der dazu vorgesehen ist, von einem Bediener betätigt zu werden, **dadurch gekennzeichnet, dass** sie ein zweites Verriegelungssystem (8) umfasst, das mit dem ersten (7) durch Verbindungsmittel (9) verbunden ist, die angebracht sind, um das zweite Verriegelungssystem (8) aufgrund der Betätigung des ersten (7) zu betätigen, wobei das erste Verriegelungssystem (7) abwechselnd zwischen einem Verriegelungs- und einem Entriegelungszustand durch Verschiebung des Griffs (12) auf der Gesamtheit eines festgesetzten Wegs betätigt wird, wobei die Verbindungsmittel (9) Mittel zur Sequenzierung (30, 32) umfassen, die angebracht sind, um das zweite Verriegelungssystem (8) zwischen einem Verriegelungszustand bzw. einem Entriegelungszustand dieses zu betätigen, wenn der Griff (12) zwischen nur einem Teil des Wegs dieser bewegt wird.

2. Vorrichtung nach Anspruch 1, **dadurch gekennzeichnet, dass** die Mittel zur Sequenzierung einen Nocken (30) einschließen, umfassend eine Spur (32), die mit einem Folgeelement (26, 36), das sich entlang dieser bewegt, zusammenarbeitet, wobei die Spur einen aktiven Teil (34) und einen passiven Teil (33, 35) umfasst, so dass die Umwandlung der Drehbewegung des Nockens (30) in Schiebebewegung des Folgeelements (26, 36) oder umgekehrt nur auf dem aktiven Teil (34) der Spur (32) durchgeführt wird.

3. Vorrichtung nach Anspruch 2, **dadurch gekennzeichnet, dass** die Verbindungsmittel (9) ein mobiles Übertragungsorgan umfassen, umfassend ein erstes Ende, das mit dem ersten Verriegelungssystem (7) verbunden ist, und ein zweites Ende, das mit dem Nocken (30) verbunden ist, wobei die Betätigung des ersten Verriegelungssystems (7) die Verschiebung des Übertragungsorgans (9) durch Zugkraft oder Druck bewirkt.

4. Vorrichtung nach Anspruch 3, **dadurch gekennzeichnet, dass** das Folgeelement (36) auf der Ebene des zweiten Endes des Übertragungsorgans (9) angebracht ist, wobei die Verschiebung des Folgeelements (36) auf dem aktiven Teil (34) der Spur (32) die Drehung des Nockens (30) bewirkt, wobei das zweite Verriegelungssystem (8) einen Riegel (25) umfasst, der mit dem Nocken (30) verbunden ist, betätigt durch die Drehung dieses.

5. Vorrichtung nach Anspruch 4, **dadurch gekennzeichnet, dass** der Riegel (25) translatorisch beweglich (A) ist und mit einem Finger (26) ausgestattet ist, der in ein längliches Loch (31), angebracht im Nocken (30), eingeführt ist.

6. Vorrichtung nach Anspruch 3, **dadurch gekennzeichnet, dass** der Nocken (30) angebracht ist, um sich auf einem festgesetzten Weg zu drehen, wenn der Griff (12) bewegt wird, wobei der Nocken (30) mit dem zweiten Verriegelungssystem (8) zusammenarbeitet, um seine Betätigung nur auf einem Teil des Gesamtwegs des Nockens (30) auszuführen.

7. Vorrichtung nach einem der Ansprüche 3 und 6, **dadurch gekennzeichnet, dass** das zweite Ende des Übertragungsorgans (9) mit dem Nocken (30) verbunden ist, so dass die Bewegung des Übertragungsorgans (9) die Drehung des Nockens (30) bewirkt, wobei das zweite Verriegelungssystem (8) einen Stift (25) umfasst, der das Folgeelement (26) einschließt, wobei die Drehung des Nockens (30) die Verschiebung des Folgelements (26) und des Stifts (25) bewirkt, wenn das Folgeelement (26) auf dem aktiven Teil (34) der Spur (32) bewegt wird.

8. Verfahren nach einem der Ansprüche 2 bis 7, **dadurch gekennzeichnet, dass** der Nocken (30) auf dem zweiten Verriegelungssystem (8) montiert ist.

9. Triebwerksgondel, **dadurch gekennzeichnet, dass** sie zumindest eine Verriegelungsvorrichtung (5, 6) nach einem der Ansprüche 1 bis 8 umfasst.

10. Flugzeug, **dadurch gekennzeichnet, dass** es mit zumindest einer Triebwerksgondel nach Anspruch 9 ausgestattet ist.
